# EUROPEAN PATENT APPLICATION

(11) **EP 4 733 428 A1**
(43) Date of publication of application: **29.04.2026**
(21) Application number: 24921167.3
(22) Date of filing: 09.04.2024
(51) Int. Cl.: C22C 38/02, C22C 38/04, C22C 38/06, C22C 38/22, C22C 38/24, C22C 38/20, C22C 38/44, C22C 38/46, C22C 38/42, B22F 10/28, B22F 10/64, C21D 6/00, C21D 6/04, C21D 1/18, B33Y 10/00, B33Y 40/20, B33Y 70/00

(54) **HOT-WORK DIE STEEL EASY FOR ADDITIVE MANUFACTURING, ADDITIVE MANUFACTURING METHOD THEREFOR, AND USE THEREOF**

(30) Priority: 04.02.2024 CN 202410153851
(71) Applicant: Shanghai ESU Laser Technology Co., Ltd, Shanghai 201505 (CN)
(72) Inventor: LIU, Qingdong, Shanghai 201505 (CN); ZHAO, Bo, Shanghai 201505 (CN); WANG, Lijun, Shanghai 201505 (CN)
(74) Representative: Calysta NV
(86) International application number: PCT/CN2024/086839
(87) International publication number: WO 2025/161123

(57) **Abstract**

The present invention belongs to the technical field of additive manufacturing die steel, and provides a hot-work die steel easy for additive manufacturing, an additive manufacturing method therefor, and a use thereof. The hot-work die steel provided by the present invention comprises the following chemical components by mass percentage: C 0.12-0.26%, Cr 4.5-5.8%, Mo 0.8-1.5%, V 0.2-1.2%, Si 0.02-0.15%, Mn 0.2-0.5%, Ni 0-2.45%, Al 0-0.80%, Cu 0-1.25%, P < 0.015%, S < 0.01%, the balance being Fe. The present invention improves the mechanical properties by forming carbides and introducing a β-NiAl phase and/or Cu-rich phase; reducing the content of C and Si not only improves the strength-plasticity/toughness ratio and avoids the cracking tendency during additive manufacturing, but also enhances thermal conductivity and service life and reduces cyclic thermal fatigue cracking.

## Description

The present application claims the priority of Chinese Patent Application No. 2024101538513, filed with the China National Intellectual Property Administration on February 04, 2024 and entitled "HOT-WORK DIE STEEL EASY FOR ADDITIVE MANUFACTURING, AND ADDITIVE MANUFACTURING METHOD AND USE THEREOF", which is incorporated herein by reference in its entirety.

### TECHNICAL FIELD

The present invention relates to the technical field of additive manufacturing die steel, and in particular to a hot-work die steel easy for additive manufacturing, and an additive manufacturing method and use thereof.

### BACKGROUND

Currently, the quality of China's high-end dies still suffers from several deficiencies, such as relatively unstable microstructure and mechanical properties, short service life, and poor reliability. As a result, many high-end dies still rely on imports. Emerging additive manufacturing technology has transformed traditional methods of die production, which not only significantly mitigates or even eliminates the adverse effects of harmful impurity elements, compositional segregation, and other aspects on raw materials (die steel), but also, through conformal cooling channels enabled by additive manufacturing, substantially enhances cooling capacity of dies, thereby improving surface quality and production efficiency of products. Additive manufacturing can also offset increased cost of die materials, enabling additively manufactured dies in China to achieve quality that is comparable to or even surpasses international standards, while offering high cost-effectiveness and strong competitiveness. Nevertheless, under repeated thermal fatigue loading, additive manufacturing die steel tends to develop cracks and undergo premature failure, compared with those made by conventional casting manufacturing methods, and there remains significant room for improvement in the service life thereof.

H13 steel is a typical hot-work die steel, commonly used in the field of die-casting dies. However, H13 steel powder is not well-suited for additive manufacturing, mainly because of the non-equilibrium martensitic phase transformation that occurs during repeated rapid melting and solidification cooling processes. A resulting lattice distortion causes extremely high thermal stress. Additionally, H13 steel itself has a hardness that may exceed 50 HRC with poor toughness and ductility, and a final microstructure readily forms coarse, chain-like carbides, which act as sites for crack initiation and promote rapid crack propagation. Consequently, additively manufactured H13 steel typically contains printing defects such as pores, cracks, and lack-of-fusion, which lead to not only reduced mechanical properties but also significantly diminished in-service performance thereof, including friction/wear resistance and thermal fatigue resistance, thereby limiting broader application thereof in dies. Additionally, H13 steel has a relatively low thermal conductivity, ranging from 24-27 W/(mK), which leads to significant thermal stress during service. Such stress, particularly when combined with high surface roughness of the conformal cooling channels, can readily initiate cracks on channel surfaces, ultimately resulting in the failure of entire die.

Currently, to address the aforementioned shortcomings of H13 steel, maraging steel (e.g., 18Ni300) produced by additive manufacturing are often used as die-casting die materials, which exhibit improved printability to some extent and avoid defect formation. Such advantages are mainly attributed to the lower as-built hardness (-35 HRC), which can subsequently be adjusted to the target hardness through subsequent heat treatment. However, maraging steel still suffers from the following drawbacks: 1, the thermal conductivity thereof is even lower than that of H13 steel, which further increases the risk of cracking during service; 2, maraging steel contains relatively high levels of elements such as Co, Ni, and Mo, contributing to higher material costs; and 3, low C component design results in inferior friction/wear resistance, thereby limiting fatigue life.

In addition to H13 steel and maraging steel, there are currently some materials in the research and development stage for additive manufacturing of die-casting dies, such as Fe-0.24C-7.6Cr-3.8Mo-0.67V-0.65W-0.29Ti-0.12La-0.09N (mass fraction, wt.%) alloy steel. Such material not only utilizes in-situ generated nano-TiN particles during gas atomization to refine the final microstructure (with an average grain size of approximately 4.3 µm) but also employs M₂C type (M is mainly Mo) carbides formed during tempering to enhance the final mechanical properties (with a hardness of approximately 47 HRC, and an impact energy of approximately 26 J). Furthermore, such material successfully avoids solidification defects during printing and stress-related defects during cooling. However, both in-situ formation of uniformly fine TiN particles and heat treatment process of up to three times narrow the process window in actual production process and increase process cost. Additionally, CN 116855852 A discloses a Fe-9.8Cr-8.0Co-2.6Mo-7.2Ni-2.4W-1.5Al-0.8Cu-0.02Re (mass fraction, wt.%) alloy steel, which can meet mechanical property requirements for die-casting dies with just a single tempering treatment, and particularly exhibits superior high-temperature performance and good formability in printing process. However, due to the high content of Co and Ni, material costs increase significantly.

Therefore, there is currently no alloy steel suitable for additive manufacturing of die-casting dies that comprehensively balances mechanical properties, service performance, and cost considerations including material and processing expenses, and providing a hot-work die steel easy for additive manufacturing that exhibits both excellent mechanical and service performance and low cost has become an urgent technical problem to be addressed in the art.

### SUMMARY

An object of the present invention is to provide a hot-work die steel easy for additive manufacturing, and an additive manufacturing method and use thereof. The hot-work die steel provided exhibits excellent mechanical properties at normal temperature and also exhibits outstanding high-temperature resistance, ensuring good service performance thereof. Furthermore, the content of precious metal elements in the hot-work die steel is low, thereby reducing production costs.

To achieve the above object, the present invention provides the following technical solutions:

The present invention provides a hot-work die steel easy for additive manufacturing, includes the following chemical components in percentage by mass: 0.12% to 0.26% of C, 4.5% to 5.8% of Cr, 0.8% to 1.5% of Mo, 0.2% to 1.2% of V, 0.02% to 0.15% of Si, 0.2% to 0.5% of Mn, 0% to 2.45% of Ni, 0% to 0.80% of Al, 0% to 1.25% of Cu, P < 0.015%, and S < 0.01%, with the balance being Fe.

Preferably, the hot-work die steel easy for additive manufacturing includes the following chemical components in percentage by mass: 0.18% to 0.26% of C, 4.8% to 5.8% of Cr, 1.0% to 1.5% of Mo, 0.5% to 1.2% of V, 0.02% to 0.1% of Si, 0.3% to 0.5% of Mn, 0.02% to 2.45% of Ni, 0% to 0.60% of Al, 0% to 1.0% of Cu, P < 0.015%, and S < 0.01%, with the balance being Fe.

Preferably, the hot-work die steel easy for additive manufacturing includes the following chemical components in percentage by mass: 0.2% to 0.26% of C, 5.0% to 5.4% of Cr, 1.2% to 1.5% of Mo, 0.8% to 1.0% of V, 0.02% to 0.05% of Si, 0.45% to 0.5% of Mn, 0.5% to 2.4% of Ni, 0.2% to 0.5% of Al, 0.1% to 0.8% of Cu, P < 0.015%, and S < 0.01%, with the balance being Fe.

The present invention provides a method for additive manufacturing of the hot-work die steel easy for additive manufacturing, including the following steps:
(1) preparing raw materials of an alloy into a hot-work die steel alloy powder by using gas atomization or rotary electrode, chemical components of the hot-work die steel alloy powder being the same as the chemical components of the hot-work die steel easy for additive manufacturing as described in the above technical solution;
(2) performing additive manufacturing using the hot-work die steel alloy powder obtained in step (1) as a raw material to obtain an as-built part; and
(3) subjecting the as-built part obtained in step (2) to post-treatment to obtain the hot-work die steel.

Preferably, in step (1), the hot-work die steel alloy powder has a particle size of 15 µm to 75 µm, an apparent density of 3.8 g/cm³ to 4.4 g/cm³, a tap density of 4.6 g/cm³ to 5.0 g/cm³, and a Hall flow rate not greater than 15 s/50 g.

Preferably, in step (2), process parameters for the additive manufacturing include: a laser power of 200 W to 450 W, a scan speed of 0.5 m/s to 1.0 m/s, a scan spacing of 50 µm to 150 µm, a powder layer thickness of 20 µm to 100 µm, an interlayer scan path included angle of 65° to 70°, and a substrate preheating temperature of 120°C to 200°C.

Preferably, in step (3), the post-treatment includes one or a combination of two or three of solution treatment, deep cryogenic treatment, and tempering treatment.

Preferably, the post-treatment is any one selected from the group consisting of tempering treatment, solution treatment + tempering treatment, deep cryogenic treatment + tempering treatment, and solution treatment + deep cryogenic treatment + tempering treatment.

Preferably, the solution treatment is conducted at a temperature of 1020°C to 1050°C for a holding time of 0.5 h to 5 h with a cooling rate of 2°C/s to 50°C/s, and cooling for the solution treatment is conducted by water quenching.

Preferably, the solution treatment is conducted at the temperature of 1020°C to 1050°C for the holding time of 1 h to 4 h with the cooling rate of 5°C/s to 50°C/s, and the cooling for the solution treatment is conducted by water quenching.

Preferably, the solution treatment is conducted at the temperature of 1020°C to 1050°C for a holding time of 2 h to 3 h with the cooling rate of 20°C/s to 50°C/s, the cooling for the solution treatment is conducted by water quenching.

Preferably, the deep cryogenic treatment is conducted at a temperature of -196°C to -120°C for a holding time of 0.5 h to 3 h, and a warm-back for the deep cryogenic treatment is conducted by leaving to stand at room temperature for 10 min to 60 min.

Preferably, the deep cryogenic treatment is conducted at the temperature of -196°C to -150°C for the holding time of 1 h to 2.5 h, and the warm-back for the deep cryogenic treatment is conducted by leaving to stand at room temperature for 20 min to 50 min.

Preferably, the deep cryogenic treatment is conducted at the temperature of -196°C for the holding time of 1.5 h to 2 h, and the warm-back for the deep cryogenic treatment is conducted by leaving to stand at room temperature for 30 min to 40 min.

Preferably, the tempering treatment is conducted at a temperature of 400°C to 750°C for a holding time of 0.5 h to 7 h.

Preferably, the tempering treatment is conducted at the temperature of 460°C to 650°C for the holding time of 3 h to 7 h.

Preferably, the tempering treatment is conducted at the temperature of 500°C to 600°C for the holding time of 3 h to 5 h.

The present invention provides use of the hot-work die steel easy for additive manufacturing as described in the above technical solutions or the hot-work die steel prepared by the method as described in the above technical solutions in a die.

Preferably, the die includes at least one selected from the group consisting of a die-casting die and an injection molding die.

The present invention provides a hot-work die steel easy for additive manufacturing, including the following chemical components in percentage by mass: 0.12% to 0.26% of C, 4.5% to 5.8% of Cr, 0.8% to 1.5% of Mo, 0.2% to 1.2% of V, 0.02% to 0.15% of Si, 0.2% to 0.5% of Mn, 0% to 2.45% of Ni, 0% to 0.80% of Al, 0% to 1.25% of Cu, P < 0.015%, and S < 0.01%, with the balance being Fe. In the present invention, on the basis of H13 steel for die-casting dies, on the one hand, the hot-work die steel reduces the content of C (the upper limit thereof being adjusted to 0.26 wt.%), so as to improve processability for additive manufacturing and reduce cracking risks, and also improve ductility and toughness, and on the other hand, the hot-work die steel reduces the content of Si (the upper limit thereof being adjusted to 0.15 wt.%) to improve thermal conductivity, giving a thermal conductivity varying in a range of 18 W/(m·K) to 38 W/(m·K), depending on actual components or element addition amount of an alloy. Furthermore, to compensate for the reduction in solid-solution strengthening effect or strength caused by the decrease in C and Si content, appropriate amounts of elements such as Cu, Ni, and/or Al are selectively added to enable the formation of potential Cu-rich phases and/or nano β-NiAl phases during heat treatment, thereby enhancing the precipitation strengthening effect. The Cu-rich phases and/or β-NiAl phases, along with MC-type (M is mainly V) and M₂C-type (M is mainly Mo) carbides, are predominantly distributed within martensitic matrix, have a size ranging from 2.5 nm to 50 nm and a number density on the order of 10²⁴m⁻³, and are uniformly and finely dispersed. Furthermore, the precipitation reaction of MC and M₂C carbides and that of the β-NiAl and/or Cu-rich phases mutually promote each other, often resulting in co-precipitation or adjacent precipitation, the primary role of which is to provide precipitation strengthening through dislocation cutting mechanism, thereby enhancing both room -temperature and high-temperature strength. Furthermore, Cr₂₃C₆ carbides are distributed at martensite lath boundaries and prior austenite grain boundaries with relatively uniform distribution, the main function of which is to stabilize hierarchical martensitic microstructure to ensure high-temperature strength and durability while also improving the fatigue resistance. The results of examples show that the hot-work die steel prepared by some embodiments of the present invention has a hardness of 35 to 53 HRC, a room-temperature yield strength of 1240 MPa to 1700 MPa, a tensile strength of 1535 MPa to 1835 MPa, an elongation of 5.2% to 19.5%, a room-temperature V-notch impact energy of 11 J to 60 J, and a thermal conductivity of 18 W/(m·K) to 38 W/(m·K); at a high temperature of 300°C, the hot-work die steel has a high-temperature yield strength of 1100 MPa to 1340 MPa, a high-temperature tensile strength of 1310 MPa to 1530 MPa, and an elongation of 9.2% to 19.5%; and at a high temperature of 600°C, the hot-work die steel has a high-temperature yield strength of 690 MPa to 840 MPa, a high-temperature tensile strength of 850 MPa to 1080 MPa, and an elongation of 11.2% to 20.5%.

### BRIEF DESCRIPTION OF THE DRAWINGS

FIG. 1 shows the hardness variation curves as a function of tempering treatment temperature for the as-built part from step (2) of Example 1, the alloy after deep cryogenic treatment from step (3) of Example 3, and the alloy after solution treatment from step (3) of Example 11;
FIG. 2 shows the hardness variation curves as a function of tempering treatment temperature for the as-built part from step (2) of Example 4, and the alloy after deep cryogenic treatment from step (3) of Example 6;
FIG. 3 shows the hardness variation curves of the hot-work die steel prepared in Example 14, Example 6, and Comparative Example 1 after holding at 550°C for 100 h;
FIG. 4 shows the metallographic microstructure of the hot-work die steel prepared in Examples 1 to 6;
FIG. 5 shows the SEM (scanning electron microscope) microstructure images of the as-built part from step (2) of Example 1, and the hot-work die steel obtained from Examples 1 to 3 and Examples 7 to 14;
FIG. 6 shows the EBSD (electron backscatter diffraction) microstructure images of the as-built part from step (2) of Example 1, and the hot-work die steel obtained from Examples 1 to 3 and Examples 10 to 11;
FIG. 7 shows the TEM (transmission electron microscopy) microstructure images of the hot-work die steel obtained from Examples 1 to 3;
FIG. 8 shows the TEM microscopic morphology image of the carbide in the hot-work die steel obtained from Example 2;
FIG. 9 shows the APT (atom probe tomography) three-dimensional spatial atom map of the hot-work die steel obtained from Example 1;
FIG. 10 shows the APT three-dimensional spatial atom map of the hot-work die steel obtained from Example 2;
FIG. 11 shows the APT three-dimensional spatial atom map of the hot-work die steel obtained from Example 3;
FIG. 12 shows the 2 at.% C isoconcentration surface distribution map of the hot-work die steel provided in Example 1;
FIG. 13 shows the 2 at.% C isoconcentration surface distribution map of the hot-work die steel provided in Example 2;
FIG. 14 shows the 2 at.% C isoconcentration surface distribution map of the hot-work die steel provided in Example 3;
FIG. 15 shows the one-dimensional concentration profile of the carbide phase P1 in FIG. 12;
FIG. 16 shows the one-dimensional concentration profile of the carbide phase P2 in FIG. 12;
FIG. 17 shows the one-dimensional concentration profile of the carbide phase P3 in FIG. 13;
FIG. 18 shows the one-dimensional concentration profile of the carbide phase P4 in FIG. 13;
FIG. 19 shows the one-dimensional concentration profile of the carbide phase P5 in FIG. 14;
FIG. 20 shows the one-dimensional concentration profile of the carbide phase P6 in FIG. 14;
FIG. 21 shows the three-dimensional spatial distribution map showing both the atom distribution and the corresponding element isoconcentration surfaces of the hot-work die steel provided in Example 4;
FIG. 22 shows the composition analysis graphs of the region of interest (ROI) in the hot-work die steel provided in Example 4;
FIG. 23 shows the composition analysis graphs of the Cu-rich phase in the hot-work die steel provided in Example 4;
FIG. 24 shows the composition analysis graphs near the interface of the hot-work die steel provided in Example 4;
FIG. 25 shows the composition analysis graphs of the carbides in the matrix of the hot-work die steel provided in Example 4; and
FIG. 26 shows the SEM morphology images of the tensile and impact fracture surfaces of the hot-work die steel prepared in Examples 1 to 3.

### DETAILED DESCRIPTION OF THE EMBODIMENTS

The present invention provides a hot-work die steel easy for additive manufacturing, including the following chemical components in percentage by mass: 0.12% to 0.26% of C, 4.5% to 5.8% of Cr, 0.8% to 1.5% of Mo, 0.2% to 1.2% of V, 0.02% to 0.15% of Si, 0.2% to 0.5% of Mn, 0% to 2.45% of Ni, 0% to 0.80% of Al, 0% to 1.25% of Cu, P < 0.015%, and S < 0.01%, with the balance being Fe.

In the present invention, the hot-work die steel easy for additive manufacturing includes, in percentage by mass, 0.12% to 0.26%, preferably 0.18% to 0.26%, and more preferably 0.2% to 0.26% of C. By controlling the content of the C element, the carbon content in the hot-work die steel is maintained within a moderate and appropriate range. On one hand, the formation of various types of carbides can either stabilize the hierarchical martensitic structure or provide precipitation strengthening, while the carbides themselves also contribute to interstitial solution strengthening. On the other hand, the lattice distortion degree during martensitic phase transformation in the additive manufacturing process is reduced, thereby lowering stress and cracking risks while reducing printing defects.

In the present invention, the hot-work die steel easy for additive manufacturing includes, in percentage by mass, 4.5% to 5.8%, preferably 4.8% to 5.8%, and more preferably 5.0% to 5.4 of Cr. In the present invention, the addition of the Cr element promotes the formation of M₂₃C₆-type carbides, which are distributed relatively uniformly along the martensite lath boundaries and prior austenite grain boundaries. The main function is to stabilize the hierarchical martensitic microstructure, ensuring high-temperature strength and durability while also improving the fatigue resistance.

In the present invention, the hot-work die steel easy for additive manufacturing includes, in percentage by mass, 0.8% to 1.5%, preferably 1.0% to 1.5%, and more preferably 1.2% to 1.5% of Mo. In the present invention, Mo is introduced to form M₂C-type carbides predominantly composed of the Mo element, which are needle or rod-shaped. Such type of carbides have high thermal stability and are not easy to grow and coarsen at a high temperature, primarily serving to enhance the high-temperature durability.

In the present invention, the hot-work die steel easy for additive manufacturing includes, in percentage by mass, 0.2% to 1.2%, preferably 0.5% to 1.2%, and more preferably 0.8% to 1.0% of V. In the present invention, V element is introduced to form MC-type carbides predominantly composed of the V element, which can also enrich a certain amount of Mo element. Such carbides are mainly distributed in the martensitic matrix, with a size ranging from 2.5 nm to 50 nm and a number density on the order of 10²⁴m⁻³. Such carbides exhibit a uniform and finely dispersed distribution and can form composite nanophases with the Cu-rich phases and/or β-NiAl phases, thereby further enhancing the strength.

In the present invention, the hot-work die steel easy for additive manufacturing includes, in percentage by mass, 0.02% to 0.15%, preferably 0.02% to 0.1%, and more preferably 0.02% to 0.05% of Si. In the present invention, the content of the Si element is controlled to further enhance the thermal conductivity, and the resulting reduction in the solution strengthening effect can be compensated by precipitation strengthening.

In the present invention, the hot-work die steel easy for additive manufacturing includes, in percentage by mass, 0.2% to 0.5%, preferably 0.3% to 0.5%, and more preferably 0.45% to 0.5% of Mn. In the present invention, a small amount of the Mn element is added. In addition to providing solution strengthening, Mn can diffuse into other precipitates (such as Cu-rich phases) or segregate at the precipitate/matrix interfaces, thereby inhibiting the growth of the precipitate and increasing the fine dispersion degree thereof, which indirectly contributes to strengthening.

In the present invention, the hot-work die steel easy for additive manufacturing includes, in percentage by mass, 0% to 2.45%, preferably 0.02% to 2.45%, and more preferably 0.5% to 2.4% of Ni. In the present invention, Ni element is added, and the content thereof is controlled. The Ni element can form β-NiAl phases with element Al, or segregate at interfaces between the Cu-rich phases and the matrix, thus inhibiting the growth of the Cu-rich phases and increasing the fine dispersion degree thereof, so as to further improve the strengthening effect of nano precipitate and the overall mechanical properties, while Ni itself can also contribute to improving toughness to a certain extent.

In the present invention, the hot-work die steel easy for additive manufacturing includes, in percentage by mass, 0% to 0.80%, preferably 0% to 0.60%, and more preferably 0.2% to 0.5 of Al. In the present invention, Al element is added, and the content thereof is controlled. The Al element can promote the formation of nano β-NiAl phases, or inhibit the growth and coarsening of the Cu-rich phases, thereby achieving an enhanced strengthening effect.

In the present invention, the hot-work die steel easy for additive manufacturing includes, in percentage by mass, 0% to 1.25%, preferably 0% to 1.0%, and more preferably 0.1% to 0.8 of Cu. In the present invention, Cu element is added, and the content thereof is controlled, thus enabling the formation of Cu-rich phases. The Cu-rich phases, precipitation of potential β-NiAl phases, along with finely dispersed precipitation of VC mutually promote each other, thereby further enhancing the strengthening effect of the nano precipitates and improving the overall mechanical properties.

In the present invention, the hot-work die steel easy for additive manufacturing includes, in percentage by mass, P < 0.015%. In the present invention, P element is an impurity element.

In the present invention, the hot-work die steel easy for additive manufacturing includes, in percentage by mass, S < 0.01%. In the present invention, S element is an impurity element.

In the present invention, the hot-work die steel easy for additive manufacturing includes, in percentage by mass, the balance being Fe. In the present invention, the Fe element serves as a matrix element.

In the present invention, on the basis of H13 steel for die-casting dies, on the one hand, the content of C (the upper limit thereof being adjusted to 0.26 wt.%) is reduced, so as to improve processability for additive manufacturing and reduce cracking risks, and also improve ductility and toughness, and on the other hand, the content of Si (the upper limit thereof being adjusted to 0.15 wt.%) is reduced to improve thermal conductivity, giving a thermal conductivity varying in a range of 18 W/(m·K) to 38 W/(m·K), depending on actual components or element addition amount of alloy. Meanwhile, to compensate for the reduction in solid-solution strengthening effect or strength caused by the decrease in C and Si content, appropriate amounts of elements such as Cu, Ni, and/or Al are selectively added to enable the formation of potential Cu-rich phases and/or nano β-NiAl phases during heat treatment, thereby enhancing the precipitation strengthening effect. The Cu-rich phases and/or β-NiAl phases, along with MC-type (M is mainly V) and M₂C-type (M is mainly Mo) carbides, are predominantly distributed within martensitic matrix, have a size ranging from 2.5 nm to 50 nm and a number density on the order of 10²⁴m⁻³, and are uniformly and finely dispersed. Furthermore, the precipitation reaction of MC and M₂C carbides and that of the β-NiAl and/or Cu-rich phases mutually promote each other, often resulting in co-precipitation or adjacent precipitation. The primary role is to provide precipitation strengthening through the dislocation cutting mechanism, thereby enhancing both room -temperature and high-temperature strength. Furthermore, Cr₂₃C₆ carbides are distributed at martensite lath boundaries and prior austenite grain boundaries with relatively uniform distribution. The main function is to stabilize the hierarchical martensitic microstructure to ensure high-temperature strength and durability while also improving the fatigue resistance.

The present invention provides a method for additive manufacturing of the hot-work die steel easy for additive manufacturing, including the following steps:
(1) preparing raw materials of an alloy into a hot-work die steel alloy powder by using gas atomization or rotary electrode, chemical components of the hot-work die steel alloy powder being the same as the chemical components of the hot-work die steel easy for additive manufacturing as described in the above technical solutions;
(2) performing additive manufacturing using the hot-work die steel alloy powder obtained in step (1) as a raw material to obtain an as-built part; and
(3) subjecting the as-built part obtained in step (2) to post-treatment to obtain the hot-work die steel.

In the present invention, raw materials of an alloy are prepared into a hot-work die steel alloy powder by using gas atomization or rotary electrode. In the present invention, there are no limitations on the specific types and sources of the raw materials of the alloy as long as the chemical components of the hot-work die steel alloy powder could meet the requirements.

In the present invention, the chemical components of the hot-work die steel alloy powder are the same as the chemical components of the hot-work die steel easy for additive manufacturing as described in the above technical solutions.

In the present invention, the hot-work die steel alloy powder preferably has a particle size of 15 µm to 75 µm, more preferably 30 µm to 75 µm; the particle size of the hot-work die steel alloy powder preferably follows a normal distribution; the hot-work die steel alloy powder preferably has an apparent density of 3.8 g/cm³ to 4.4 g/cm³, more preferably 4.0 g/cm³ to 4.4g/cm³; the hot-work die steel alloy powder preferably has a tap density of 4.6 g/cm³ to 5.0g/cm³, more preferably 4.8 g/cm³ to 5.0g/cm³; the hot-work die steel alloy powder preferably has a Hall flow rate of ≤ 15 s/50 g, more preferably ≤ 14 s/50 g; the hot-work die steel alloy powder is preferably spherical in shape; and the microstructure of the hot-work die steel alloy powder is preferably a fine-grained martensite microstructure. In the present invention, the parameters of the spherical alloy powder are controlled, which is conducive to further enhancing the performance of the as-built part during additive manufacturing process.

In the present invention, there are no limitations on the specific operations and process parameters for preparing the hot-work die steel alloy powder by using the gas atomization or the rotary electrode, and the specific operations of the gas atomization or the rotary electrode that are well known to a person skilled in the art may be used, as long as the parameters of the hot-work die steel alloy powder could meet the requirements.

In the present invention, after obtaining the hot-work die steel alloy powder, additive manufacturing is performed using the hot-work die steel alloy powder as a raw material to obtain an as-built part.

In the present invention, process parameters for the additive manufacturing preferably include: a laser power of 200 W to 450 W, a scan speed of 0.5 m/s to 1.0 m/s, a scan spacing of 50 µm to 150 µm, a powder layer thickness of 20 µm to 100 µm, an interlayer scan path included angle of 65° to 70°, and a substrate preheating temperature of 120°C to 200°C; more preferably, the laser power of 250 W to 400 W, the scan speed of 0.5 m/s to 1.0 m/s, the scan spacing of 50 µm to 120 µm, the powder layer thickness of 40 µm to 80 µm, the interlayer scan path included the angle of 65° to 70°, and the substrate preheating temperature of 120°C to 200°C; and further preferably the laser power of 300 W to 350 W, the scan speed of 0.5 m/s to 1.0 m/s, the scan spacing of 80 µm to 120 µm, the powder layer thickness of 50 µm to 80 µm, the interlayer scan path included the angle of 65° to 70°, and the substrate preheating temperature of 150°C to 180°C. In the present invention, the strength of the hot-work die steel can be further improved by controlling the parameters of the additive manufacturing process.

In the present invention, there are no specific limitations on the structure and dimensions of the as-built part, which can be configured according to product requirements.

In the present invention, after obtaining the as-built part, the as-built part is subjected to post-treatment to obtain the hot-work die steel.

In the present invention, the post-treatment preferably includes one or a combination of two or three selected from the group consisting of a solution treatment, a deep cryogenic treatment, and a tempering treatment; and more preferably, the post-treatment is any one selected from the group consisting of the tempering treatment, the solution treatment + the tempering treatment, the deep cryogenic treatment + the tempering treatment, and the solution treatment + the deep cryogenic treatment + the tempering treatment.

In the present invention, the solution treatment is preferably conducted at a temperature of 1020°C to 1050°C for a holding time of 0.5 h to 5 h, more preferably 1 h to 4 h, and further preferably 2 h to 3 h with a cooling rate of 2°C/s to 50°C/s, more preferably 5°C/s to 50°C/s, and further preferably 20°C/s to 50°C/s; and cooling for the solution treatment is preferably conducted by water quenching. In the present invention, the hot-work die steel obtained by the solution treatment has a microstructure of equiaxed grains (prior austenite grains) with a hierarchical martensite lath structure, which is similar to as-cast microstructure.

In the present invention, the deep cryogenic treatment is preferably conducted at a temperature of -196°C to -120°C, more preferably -196°C to -150°C, and further preferably -196°C for a holding time of 0.5 h to 3 h, more preferably 1 h to 2.5 h; and further preferably 1.5 h to 2 h; and a warm-back for the deep cryogenic treatment is preferably conducted by leaving to stand at room temperature for 10 min to 60 min, more preferably 20 min to 50 min, and further preferably 30 min to 40 min. In the present invention, by adding deep cryogenic treatment, the layered structure of alternating cellular and columnar grains of the additively manufactured hot-work die steel is not altered. Following tempering, the resulting microstructure consists essentially of a body-centered cubic α-phase matrix, with virtually no face-centered cubic γ-phase (austenite) remaining. In other words, the deep cryogenic treatment promotes the transformation of potentially residual austenite into martensite and increases crystal defects (such as dislocation density), enabling better control over the distribution morphology of precipitates in the tempered microstructure.

In the present invention, the tempering treatment is preferably conducted at a temperature of 400°C to 750°C, more preferably 460°C to 650°C, further preferably 500°C to 600°C, and most preferably 550°C to 575°C for a holding time of 0.5 h to 7 h, more preferably 3 h to 7 h, further preferably 3 h to 5 h, and most preferably 3 h. In the present invention, through tempering treatment, the method enables the hot-work die steel to develop a layered microstructure of alternating cellular and columnar grains, resulting in refined equivalent grains and thereby achieving an improved strength-toughness balance.

In the present invention, under a condition that the post-treatment is conducted by tempering treatment or deep cryogenic treatment + tempering treatment, the hot-work die steel preferably has a matrix microstructure of lath martensite with a lath width of 0.8 µm to 1.5 µm, and grain morphology exhibits a layered structure of alternating cellular and columnar grains. In the present invention, under a condition that the post-treatment is conducted by solution treatment + tempering treatment, or solution treatment + deep cryogenic treatment + tempering treatment, the lath martensite in the hot-work die steel preferably transforms into fully equiaxed grains (prior austenite grains), which resembles a heat-treated microstructure of conventional cast alloys.

In the present invention, the precipitates of the hot-work die steel include Cr₂₃C₆, VC, and other types of carbides and potential β-NiAl phases and Cu-rich phases. Cr₂₃C₆ carbides are distributed at martensite lath boundaries and prior austenite grain boundaries, with relatively uniform distribution, and the main function thereof is to stabilize hierarchical martensitic microstructure to ensure high-temperature strength and durability while also improving the fatigue resistance. The VC carbides, β-NiAl phases and Cu-rich phases are mainly distributed in the martensite matrix, have a size ranging from 2.5 nm to 50 nm and a number density on the order of 10²⁴m⁻³, and are uniformly and finely dispersed. Furthermore, two or more distinct types of such precipitates often undergo co-precipitation or adjacent precipitation, and the primary function thereof is to provide precipitation strengthening through dislocation cutting mechanism, thereby improving the strength of the hot-work die steel.

In the present invention, on the basis of H13 steel and considering the operating temperature of die-casting dies, the chemical composition of the hot-work die steel is optimized, and a tunable strength-ductility-toughness balance is achieved through subsequent additive manufacturing process and post-treatment processes, providing technical support for the stable production and scalable application of additive manufacturing of dies.

The present invention further provides use of the hot-work die steel easy for additive manufacturing as described in the above technical solutions or the hot-work die steel prepared according to the method as described in the above technical solutions in a die.

In the present invention, the die preferably includes a die-casting die and/or an injection molding die.

In the present invention, there are no limitations on the specific application method, and those skilled in the art may make routine selections based on the specific heat treatment processes and the targeted mechanical properties.

The technical solutions in the present invention will be described clearly and completely below with reference to the examples of the present invention. Apparently, the described examples are merely some, rather than all of the examples of the present invention. Based on the examples in the present invention, all other examples obtained by those of ordinary skill in the art without involving creative effort belong to the scope of the present invention.

### Example 1

A hot-work die steel easy for additive manufacturing consisted of the following chemical components in percentage by mass: 0.23% of C, 5.14% of Cr, 1.3% of Mo, 0.38% of V, 0.11% of Si, 0.4% of Mn, P < 0.01%, and S < 0.01%, with the balance being Fe, which was EM003 alloy according to the chemical components thereof.

A method for additive manufacturing of the hot-work die steel easy for additive manufacturing was performed as follows:
(1) Raw materials of an alloy were prepared into a hot-work die steel alloy powder by using gas atomization, where chemical components of the hot-work die steel alloy powder were the same as the chemical components of the hot-work die steel easy for additive manufacturing; the hot-work die steel alloy powder had a particle size of 45±12 µm; the particle size of the hot-work die steel alloy powder followed a normal distribution; the hot-work die steel alloy powder had an apparent density of 4.4 g/cm³; the hot-work die steel alloy powder had a tap density of 5.0 g/cm³; the hot-work die steel alloy powder had a Hall flow rate of 14 s/50 g; the hot-work die steel alloy powder was spherical in shape; and microstructure of the hot-work die steel alloy powder was a fine-grained martensite microstructure.
(2) Additive manufacturing was performed using the hot-work die steel alloy powder obtained in step (1) as a raw material to obtain an as-built part, where process parameters for the additive manufacturing consisted of: a laser power of 285 W, a scan speed of 0.8 m/s, a scan spacing of 110 µm, a powder layer thickness of 50 µm, an interlayer scan path included angle of 67°, and a substrate preheating temperature of 150°C.
(3) The as-built part obtained in step (2) was subjected to post-treatment to obtain the hot-work die steel, where the post-treatment was conducted by tempering treatment; the tempering treatment was conducted at a temperature of 550°C and held for 3 h; and a resulting hot-work die steel was denoted as T550.

### Example 2

A hot-work die steel easy for additive manufacturing consisted of the following chemical components in percentage by mass: 0.23% of C, 5.14% of Cr, 1.3% of Mo, 0.38% of V, 0.11% of Si, 0.4% of Mn, P < 0.01%, and S < 0.01%, with the balance being Fe, which was EM003 alloy according to the chemical components thereof.

An additive manufacturing method thereof was the same as that in Example 1, except that the tempering treatment was conducted at a temperature of 575°C, and a resulting hot-work die steel was denoted as T575.

### Example 3

A hot-work die steel easy for additive manufacturing consisted of the following chemical components in percentage by mass: 0.23% of C, 5.14% of Cr, 1.3% of Mo, 0.38% of V, 0.11% of Si, 0.4% of Mn, P < 0.01%, and S < 0.01%, with the balance being Fe, which was EM003 alloy according to the chemical components thereof.

An additive manufacturing method thereof was the same as that in Example 1, except that the post-treatment was conducted by deep cryogenic treatment + tempering treatment; the deep cryogenic treatment was conducted at a temperature of -196°C and held for 2 h, warm-back was conducted by leaving to stand at room temperature for 30 min; and the tempering treatment was conducted at a temperature of 550°C and held for 3 h; and a resulting hot-work die steel was denoted as LNC+T550.

### Example 4

A hot-work die steel easy for additive manufacturing consisted of the following chemical components in percentage by mass: 0.26% of C, 5.11% of Cr, 1.3% of Mo, 0.99% of V, 0.03% of Si, 0.42% of Mn, 0.64% of Al, 2.31% of Ni, 1.08% of Cu, P < 0.01%, and S < 0.01%, with the balance being Fe, which was EM006 alloy according to the chemical components thereof.

A method for additive manufacturing of the hot-work die steel easy for additive manufacturing was performed as follows:
(1) Raw materials of an alloy were prepared into a hot-work die steel alloy powder by using gas atomization, where chemical components of the hot-work die steel alloy powder were the same as the chemical components of the foregoing hot-work die steel easy for additive manufacturing; the hot-work die steel alloy powder had a particle size of 45±12 µm; the particle size of the hot-work die steel alloy powder followed a normal distribution; the hot-work die steel alloy powder had an apparent density of 4.3 g/cm³; the hot-work die steel alloy powder had a tap density of 4.9 g/cm³; the hot-work die steel alloy powder had a Hall flow rate of 14.3 s/50 g; the hot-work die steel alloy powder was spherical in shape; and microstructure of the hot-work die steel alloy powder was a fine-grained martensite microstructure.
(2) Additive manufacturing was performed using the hot-work die steel alloy powder obtained in step (1) as a raw material to obtain an as-built part, where process parameters for the additive manufacturing consisted of: a laser power of 285 W, a scan speed of 0.8 m/s, a scan spacing of 110 µm, a powder layer thickness of 50 µm, an interlayer scan path included angle of 67°, and a substrate preheating temperature of 150°C.
(3) The as-built part obtained in step (2) was subjected to post-treatment to obtain the hot-work die steel, where the post-treatment was conducted by tempering treatment; the tempering treatment was conducted at a temperature of 550°C and held for 3 h; and a resulting hot-work die steel was denoted as T550.

### Example 5

A hot-work die steel easy for additive manufacturing consisted of the following chemical components in percentage by mass: 0.26% of C, 5.11% of Cr, 1.3% of Mo, 0.99% of V, 0.03% of Si, 0.42% of Mn, 0.64% of Al, 2.31% of Ni, 1.08% of Cu, P < 0.01%, and S < 0.01%, with the balance being Fe, which was EM006 alloy according to the chemical components thereof.

An additive manufacturing method thereof was the same as that in Example 4, except that the tempering treatment was conducted at a temperature of 575°C, and a resulting hot-work die steel was denoted as T575.

### Example 6

A hot-work die steel easy for additive manufacturing consisted of the following chemical components in percentage by mass: 0.26% of C, 5.11% of Cr, 1.3% of Mo, 0.99% of V, 0.03% of Si, 0.42% of Mn, 0.64% of Al, 2.31% of Ni, 1.08% of Cu, P < 0.01%, and S < 0.01%, with the balance being Fe, which was EM006 alloy according to the chemical components thereof.

An additive manufacturing method thereof was the same as that in Example 4, except that the post-treatment was conducted by deep cryogenic treatment + tempering treatment; the deep cryogenic treatment was conducted at a temperature of -196°C and held for 2 h, warm-back was conducted by leaving to stand at room temperature for 30 min; and the tempering temperature was conducted at a temperature of 625°C and held for 3 h; and a resulting hot-work die steel was denoted as LNC+T625.

### Example 7

A hot-work die steel easy for additive manufacturing was prepared by the procedures the same as those in Example 1, except that in step (3), the tempering treatment was conducted at a temperature of 500°C; and a resulting hot-work die steel was denoted as T500.

### Example 8

A hot-work die steel easy for additive manufacturing was prepared by the procedures the same as those in Example 1, except that in step (3), the tempering treatment was conducted at a temperature of 600°C; and a resulting hot-work die steel was denoted as T600.

### Example 9

A hot-work die steel easy for additive manufacturing was prepared by the procedures the same as those in Example 1, except that in step (3), the tempering treatment was conducted at a temperature of 650°C; and a resulting hot-work die steel was denoted as T650.

### Example 10

A hot-work die steel easy for additive manufacturing was prepared by the procedures the same as those in Example 1, except that in step (3), the post-treatment was conducted by solution treatment; the solution treatment was conducted at a temperature of 1030°C for 1 h with a cooling rate of 50°C/s, cooling was conducted by water quenching; and a resulting hot-work die steel was denoted as Q1030.

### Example 11

A hot-work die steel easy for additive manufacturing was prepared by the procedures the same as those in Example 1, except that in step (3), the post-treatment was conducted by solution treatment + tempering treatment; the solution treatment was conducted at a temperature of 1030°C for 1 h with a cooling rate of 50°C/s, cooling was conducted by water quenching; the tempering treatment was conducted at a temperature of 550°C and held for 3 h; and a resulting hot-work die steel was denoted as QT550.

### Example 12

A hot-work die steel easy for additive manufacturing was prepared by the procedures the same as those in Example 1, except that in step (3), the tempering treatment was conducted at a temperature of 575°C; and a resulting hot-work die steel was denoted as QT575.

### Example 13

A hot-work die steel easy for additive manufacturing was prepared by the procedures the same as those in Example 1, except that in step (3), the tempering treatment was conducted at a temperature of 600°C; and a resulting hot-work die steel was denoted as QT600.

### Example 14

A hot-work die steel easy for additive manufacturing was prepared by the procedures the same as those in Example 1, except that in step (3), the tempering treatment was conducted at a temperature of 575°C; and a resulting hot-work die steel was denoted as QT575.

**Comparative Example 1**

A commercial solid hot-work die steel consisted of the following chemical components in percentage by mass: 0.35% of C, 5.0% of Cr, 2.3% of Mo, 0.6% of V, 0.2% of Si, 0.5% of Mn, P < 0.01%, and S < 0.01%, with the balance being Fe, which was denoted as Dievar according to the chemical components thereof.

A method for preparing the commercial solid hot-work die steel was performed as follows:
(1) Raw materials of an alloy were melted and forged in sequence to obtain an as-built part.
(2) The as-built part obtained in step (1) was subjected to post-treatment to obtain the commercial solid hot-work die steel, where the post-treatment was conducted by solution treatment + tempering treatment; the solution treatment was conducted at a temperature of 1030°C and held for 30 min, cooling was conducted by air cooling; the tempering treatment was conducted at a temperature of 615°C and held for 2 h; and a resulting hot-work die steel was denoted as Q+T615.

The properties of the hot-work die steel prepared in Examples 1 to 6 and Comparative Example 1 were tested. The results are shown in Table 1:

Table 1 Properties of hot-work die steel prepared in Examples 1 to 6 and Comparative Example 1

| | Hardness HRC | Stretching temperature | Tensile strength | Yield strength | Elongation at break | Impact absorbed energy at 23°C | Heat treatment |
|---|---|---|---|---|---|---|---|
| | | | Rₘ/MPa | R_{p0.2}/MPa | A/% | Kᵥ₂/J | |
| Example 1 | 46.8 | 23°C | 1615 ± 6.5 | 1271 ± 19 | 18.5 ± 1.3 | 43 ± 6.6 (37) | T550 |
| Example 2 | 46.4 | 23°C | 1601 ± 3.5 | 1322 ± 7.5 | 17.5 ± 0.3 | 39 ± 19.7 (18) | T575 |
| Example 3 | 46.2 | 23°C | 1550 ± 7 | 1314 ± 5.5 | 17 ± 0.7 | 51.7 ± 2.1 (50) | LNC + T550 |
| | | 300°C | 1498 ± 8 | 1306 ± 7 | 14 ± 0.5 | | |
| | | 600°C | 1006 ± 21 | 831 ± 21.5 | 13.7 ± 0.7 | | |
| Example 4 | 52.0 | 23°C | 1819 ± 32.5 | 1678 ± 30 | 9.5 ± 0.7 | 16 ± 5.3 (12) | T550 |
| Example 5 | 52.2 | 23°C | 1824 ± 29.7 | 1699 ± 34.3 | 8.5 ± 0.9 | 11.9 ± 3.8 (7) | T575 |
| Example 6 | 46.2 | 23°C | 1559 ± 36 | 1351 ± 37 | 12.5 ± 0.5 | 24.7 ± 2.0 (22) | LNC+T625 |
| | | 300°C | 1343 ± 57 | 1147 ± 48 | 11 ± 0.8 | | |
| | | 600°C | 878 ± 37 | 702 ± 6 | 12 ± 1.3 | | |
| Comparative Example 1 | 46.5 | 23°C | 1596 ± 8 | 1415 ± 7 | 11.2 ± 0.9 | 23.8 ± 0.7 (23) | Q+T615 |
| | | 300°C | 1410 ± 10 | 1255 ± 3 | 10.7 ± 0.8 | | |
| | | 600°C | 980 ± 40 | 772 ± 37 | 18.5 ± 1.5 | | |

In Table 1, the numerical value in the parentheses is the minimum value of impact energy; T refers to tempering treatment, LNC refers to deep cryogenic treatment, and Q refers to solution treatment.

As can be seen from Table 1, the hot-work die steel has a hardness of 35 to 53 HRC, a room-temperature yield strength of 1240 MPa to 1700 MPa, a tensile strength of 1535 MPa to 1835 MPa, an elongation of 5.2% to 19.5%, and a room-temperature V-notch impact energy of 11 J to 60 J; at a high temperature of 300°C, the hot-work die steel has a high-temperature yield strength of 1100 MPa to 1340 MPa, a high-temperature tensile strength of 1310 MPa to 1530 MPa, and an elongation of 9.2% to 19.5%; and at a high temperature of 600°C, the hot-work die steel has a high-temperature yield strength of 690 MPa to 840 MPa, a high-temperature tensile strength of 850 MPa to 1080 MPa, and an elongation of 11.2% to 20.5%. It can be seen that in the present invention, the hot-work die steel has excellent mechanical properties at normal temperature and also exhibits outstanding high-temperature resistance, ensuring good service performance thereof.

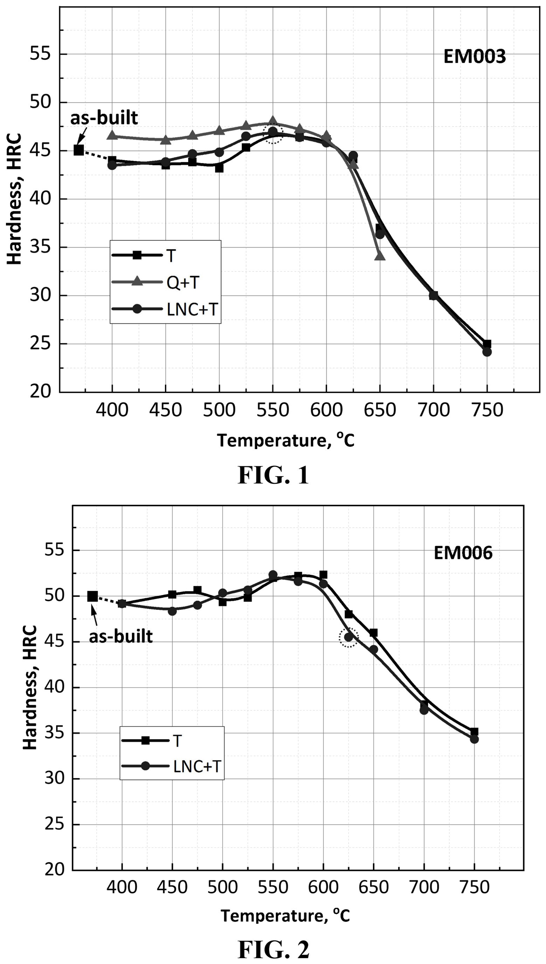

FIG. 1 shows the hardness variation curves as a function of tempering treatment temperature for the as-built part from step (2) of Example 1, the alloy after deep cryogenic treatment from step (3) of Example 3, and the alloy after solution treatment from step (3) of Example 11. FIG. 2 shows the hardness variation curves as a function of tempering treatment temperature for the as-built part from step (2) of Example 4, and the alloy after deep cryogenic treatment from step (3) of Example 6. The as-built in FIGs. 1 and 2 shows the hardness of the alloys without tempering treatment. As can be seen from FIGs. 1 and 2, the EM006 alloy exhibits a higher initial as-printed hardness and higher hardness after tempering at various temperatures compared with the EM003 alloy, which is attributed to the addition of alloying elements such as Ni, Cu, and Al, as well as the strengthening effects from multiple composite precipitates including carbides and Cu-rich phases. Consequently, the EM006 alloy is suitable for scenarios requiring higher hardness. Although both alloys exhibit a hardness peak around 550°C, indicating some precipitation strengthening effect, the EM006 alloy maintains the strengthening effect up to around 600°C, showing better resistance to softening upon tempering. The introduction of deep cryogenic treatment (blue line) does not significantly affect the hardness and tempering response of both alloys. However, the solution treatment (red line) notably increases the hardness before tempering at 600°C, but also causes a sharp decline in hardness when tempering at a high temperature, which can be attributed to the introduction of solution treatment. On the one hand, the solution treatment enables more alloying elements to be dissolved into the austenite, which is more conducive to the tempering precipitation of alloy carbides, resulting in a higher initial hardness. On the other hand, the solution treatment causes damage to the fine as-built structure consisting of columnar and equiaxed grains, which promotes the recrystallization of lath martensite, leading to a rapid decline in hardness at later stages.

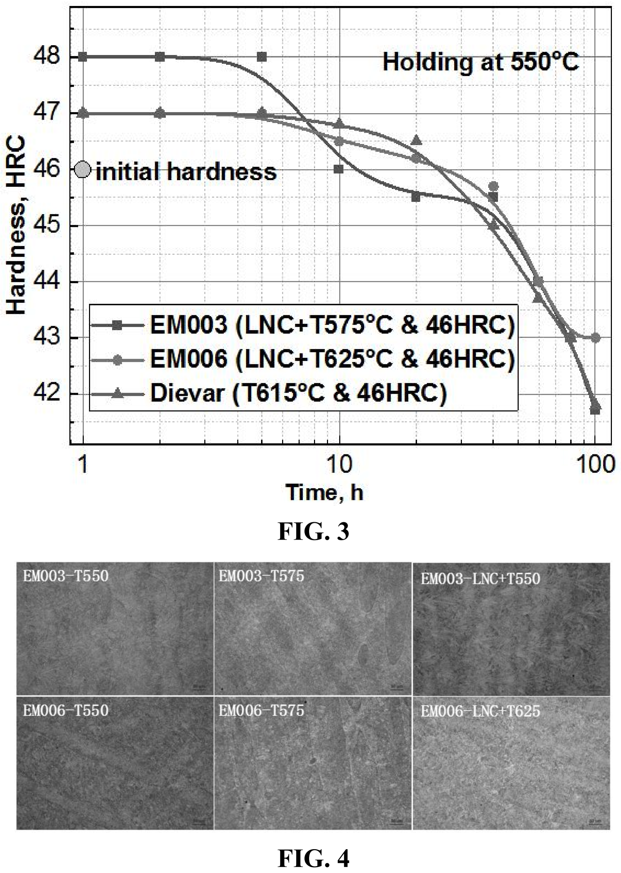

FIG. 3 shows the hardness variation curves of the hot-work die steel prepared in Example 14, Example 6, and Comparative Example 1 after holding at 550°C for 100 h. As can be seen from FIG. 3, the hardness of all the three hot-work die steels, after different heat treatments, is maintained around 46 HRC, meeting the hardness requirements for practical applications. Overall, the hardness of all the three hot-work die steel decreases with extended holding time. However, when held for 100 h, the hot-work die steel from Example 6 exhibits significantly higher hardness than those from Example 3 and Comparative Example 1, indicating that the hot-work die steel from Example 6 has better resistance to softening upon tempering, and superior service performance such as improved thermal fatigue resistance. It should be noted that after tempering for 1 h, EM003 exhibits higher hardness than EM006 and Dievar, which is attributed to EM003's lower tempering temperature (575°C). At 575°C the second phase has not yet fully precipitated to reach the optimal strengthening effect. In contrast, the latter two alloys were tempered at higher temperatures (625°C and 615°C), resulting in microstructures that are already stabilized, and during prolonged holding, there is only a decrease in hardness due to softening.

FIG. 4 shows the metallographic microstructure of the hot-work die steel prepared in Examples 1 to 6. As shown in FIG. 4, neither direct tempering nor tempering after deep cryogenic treatment alters the initial as-built layered structure of alternating cellular and columnar grains (i.e., the structure of the as-built part). The microstructure after different heat treatments is martensitic microstructure, and the microstructure appears more uniform after the deep cryogenic treatment. Overall, there is little difference in the microstructure between the two hot-work die steels. Furthermore, no significant defects such as pores, lack-of-fusion, or cracks are observed in the microstructure, indicating that such hot-work die steel (within the chemical components range from EM003 to EM006) exhibits good printability under the described additive manufacturing process parameters. This not only eliminates chain-like carbides commonly found in similar steel like H13 but also effectively avoids the risk of cracking.

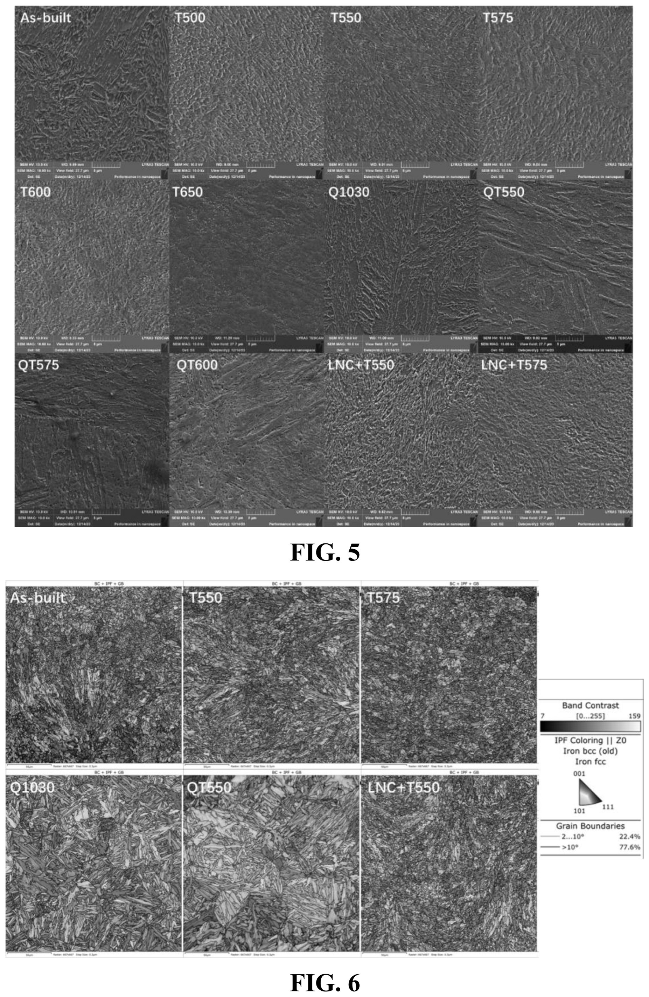

FIG. 5 shows the SEM microstructure images of the as-built part from step (2) of Example 1, and the hot-work die steel obtained from Examples 1 to 3 and Examples 7 to 14. As shown in FIG. 5, the as-built layered structure of alternating cellular and columnar grains in the as-built part persists up to 575°C. At 600°C and 650°C, the grain morphology changes significantly, with distinct second-phase particles (T650) appearing, which indicates partial recrystallization of the initial lath martensite microstructure, leading to an increase in the equivalent grain size and also the growth and coarsening of the second phase. Consequently, the strengthening effect is diminished, ultimately resulting in an overall hardness reduction, which is consistent with the results in FIG. 1. In contrast, after solution treatment, the initial as-built layered structure of alternating cellular and columnar grains completely eliminates, and the tempered microstructure differs from that of the sample without solution treatment, exhibiting a larger equivalent grain size. Although the deep cryogenic treatment does not alter the layered structure of alternating cellular and columnar grains, the grains appear to be finer.

FIG. 6 shows the EBSD microstructure images of the as-built part from step (2) of Example 1, and the hot-work die steel obtained from Examples 1 to 3 and Examples 10 to 11. As can be seen from FIG. 6, the EDSB microstructures further confirm that the as-built and tempered samples (including those with deep cryogenic treatment) primarily exhibit a layered structure of alternating cellular and columnar grains. In contrast, after solution treatment, the structure transforms completely into equiaxed grains (prior austenite grains), which resembles the microstructure of conventionally cast alloys after heat treatment. Furthermore, the hierarchical structure of the martensite is more distinct. In addition, the introduction of solution treatment leads to a significant increase in the equivalent grain size, which diminishes the grain refinement strengthening effect to some extent. However, it also offers two advantages: 1, the solution treatment almost completely eliminates the stresses and anisotropy inherent in the as-built microstructure; and 2, the solution treatment allows for more complete dissolution of alloying elements, which in turn facilitates precipitation strengthening during tempering. It is noteworthy that the grains in the printed alloy have a random orientation with no significant preferred orientation, which is beneficial for the application of the hot-work die steel.

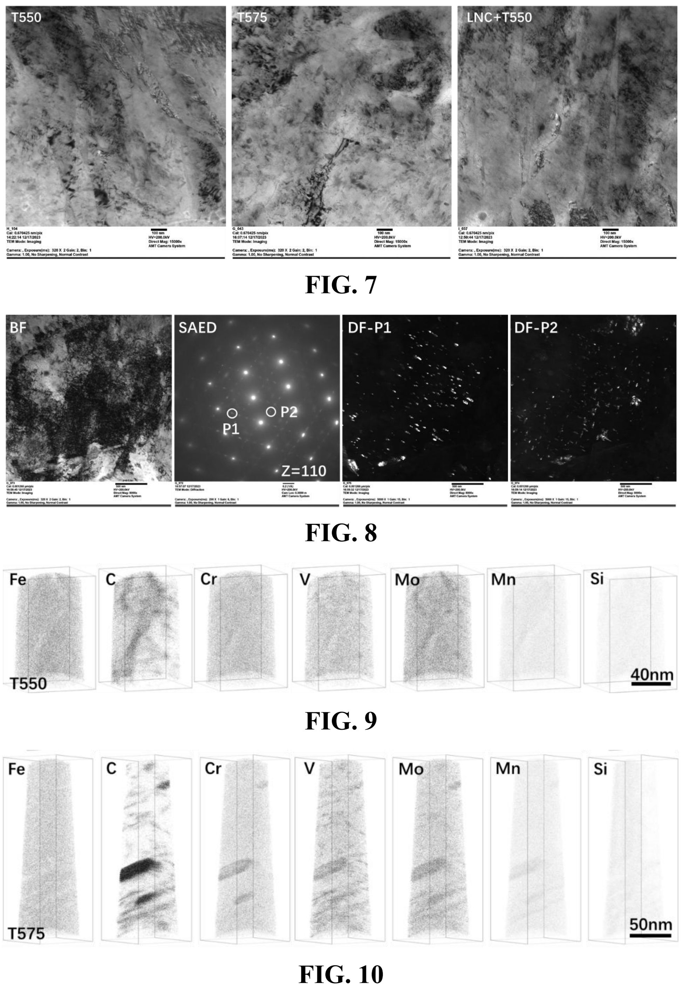

FIG. 7 shows the TEM microstructure images of the hot-work die steel obtained from Examples 1 to 3. As shown in FIG. 7, although additive manufacturing effectively refines the grains, the resulting cellular or columnar grains are still composed of lath martensite, with a high density of dislocations and a small amount of observable carbide precipitates. Tempering (550°C and 575°C) could neither completely eliminate such low-angle lath boundaries nor significantly accelerate the coarsening of carbides. In addition, the tempering temperature and deep cryogenic treatment do not significantly alter the microstructure.

FIG. 8 shows the TEM microscopic morphology images of the carbide in the hot-work die steel obtained from Example 2, including bright-field (BF) images, selected-area electron diffraction (SAED) patterns, and dark-field (DF) images of corresponding carbides (P1 and P2). As shown in FIG. 8, the hot-work die steel contains two main types of carbides within a heavily dislocated martensitic matrix. The first type, exhibiting the same orientation and growth direction and appearing as short rods, are Cr-rich M₂₃C₆ carbides, which primarily serve to stabilize the hierarchical martensitic structure and enhance high-temperature durability (DF-P1). The second type, having mutually perpendicular morphologies in a needle-like shape, are V- and Mo-rich MC or M₂C carbides, which mainly contribute to improving the overall mechanical properties through precipitation strengthening.

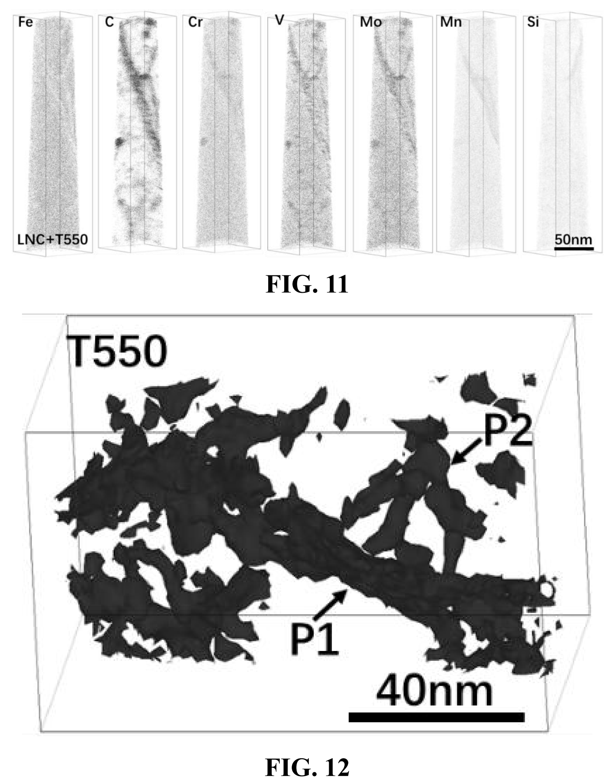

FIG. 9 shows the APT three-dimensional spatial atom map of the hot-work die steel obtained from Example 1. FIG. 10 shows the APT three-dimensional spatial atom map of the hot-work die steel obtained from Example 2. FIG. 11 shows the APT three-dimensional spatial atom map of the hot-work die steel obtained from Example 3. As can be seen from FIGs. 9 to 11, the distribution of C atoms in the hot-work die steel is uneven, showing varying degrees of enrichment and different morphologies; furthermore, strong carbide-forming elements such as Cr, V, and Mo and weak carbide-forming elements like Mn exhibit different levels of segregation or enrichment at corresponding locations, which confirms the presence of different types of carbides. Furthermore, segregation of the non-carbide-forming element Si is also observed, which may be attributed to the diffusion of Si to either the carbide/matrix interfaces or the lath martensite boundaries. In terms of morphological characteristics, C and the carbide-forming elements exhibit similar distribution patterns when using different heat treatment.

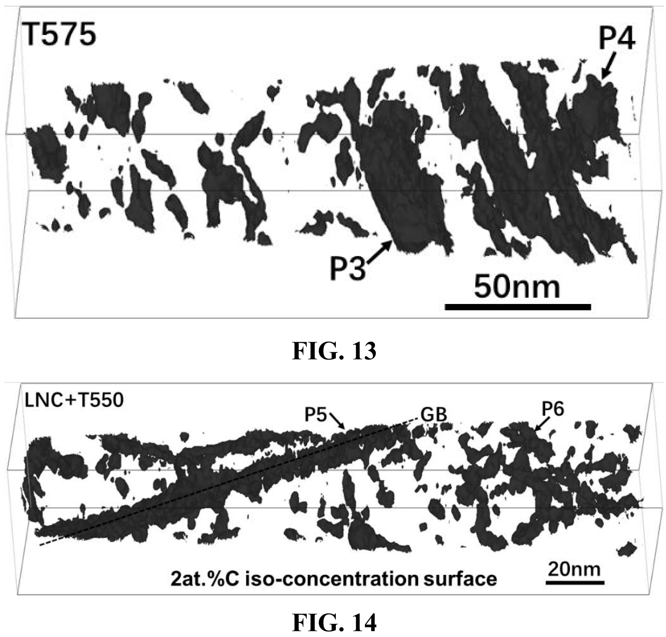

FIG. 12 shows the 2 at.% C isoconcentration surface distribution map of the hot-work die steel provided in Example 1. FIG. 13 shows the 2 at.% C isoconcentration surface distribution map of the hot-work die steel provided in Example 2. FIG. 14 shows the 2 at.% C isoconcentration surface distribution map of the hot-work die steel provided in Example 3. In FIGs. 12 to 14, P1 to P6 are potential carbide phases. As shown in FIGs. 12 to 14, on the basis of the distribution morphology, P5 is marked as a grain boundary (GB) carbide or C segregation. The distribution of C atoms or carbides is correlated with structures like interfaces. During tempering, C atoms preferentially diffuse to crystalline defects, thereby promoting carbide nucleation.

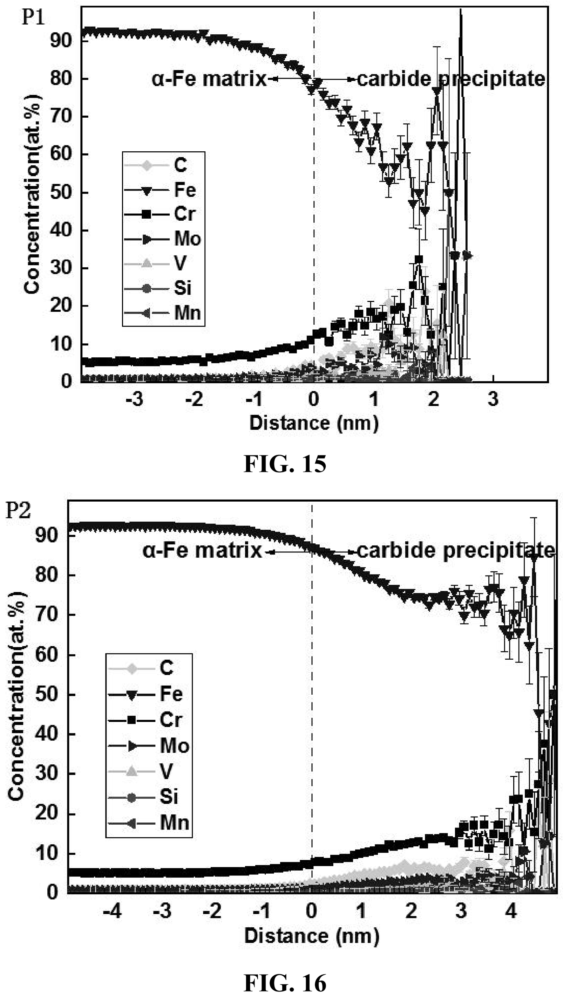

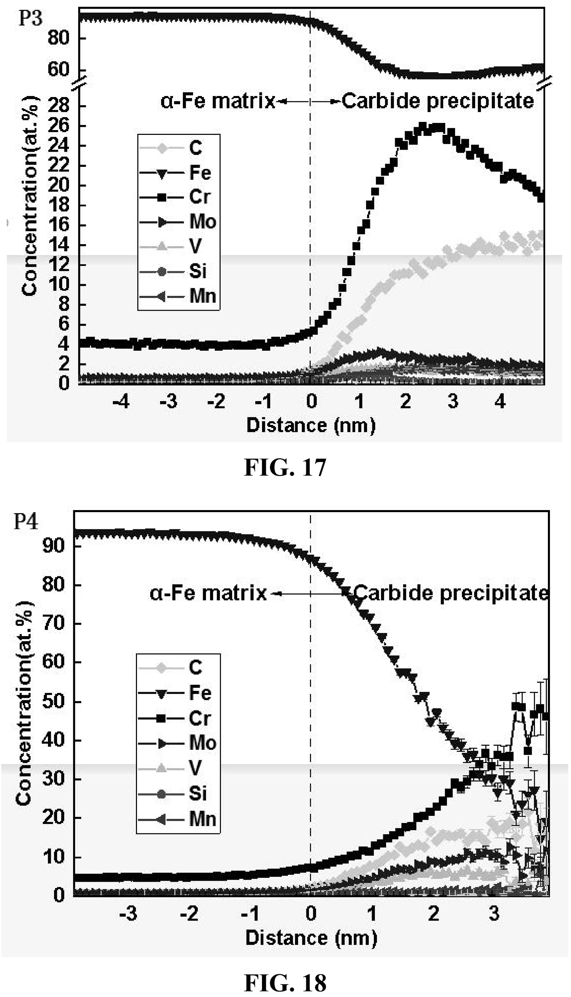

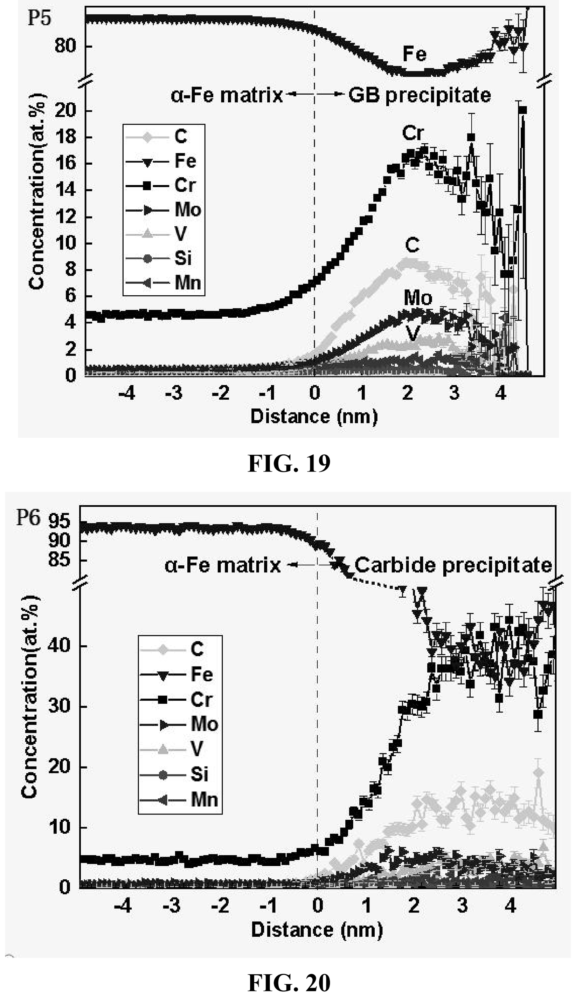

FIG. 15 shows the one-dimensional concentration profile of the carbide phase P1 in FIG. 12. FIG. 16 shows the one-dimensional concentration profile of the carbide phase P2 in FIG. 12. FIG. 17 shows the one-dimensional concentration profile of the carbide phase P3 in FIG. 13. FIG. 18 shows the one-dimensional concentration profile of the carbide phase P4 in FIG. 13. FIG. 19 shows the one-dimensional concentration profile of the carbide phase P5 in FIG. 14. FIG. 20 shows the one-dimensional concentration profile of the carbide phase P6 in FIG. 14. As shown in FIGs. 15 to 20, all types of carbides are enriched with Cr, Mo, and V, but the specific concentrations thereof vary, which suggests different nucleation sites for the carbides, resulting in variations in the size, morphology, and composition of the carbides, further leading to varying strengthening effects. Based on the compositional characteristics of the carbides, the initial alloy components could be further optimized to control the carbide formation process, resulting in a more uniform and finely dispersed carbide distribution, thereby enhancing the overall performance of the alloy.

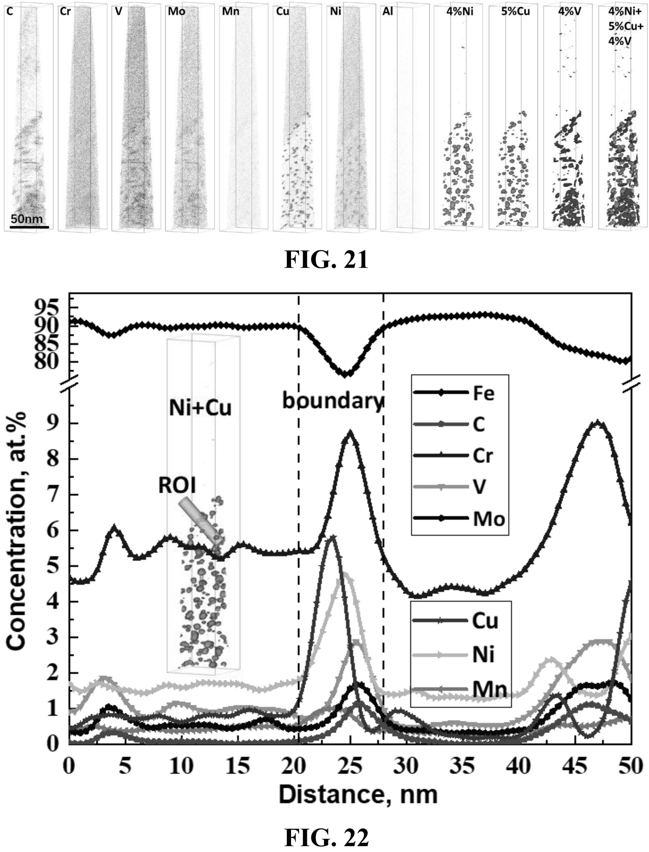

FIG. 21 shows the three-dimensional spatial distribution map showing both the atom distribution and the corresponding element isoconcentration surfaces of the hot-work die steel provided in Example 4. As can be seen from FIG. 21, the entire region of the hot-work die steel is divided into two parts: upper and lower. The upper part is almost free of precipitate phases, with various alloying elements uniformly distributed. The lower part contains dispersed Cu-rich phases and carbides. The Cu-rich phases are spherical, and the carbides grow adjacent to the Cu-rich phases, and thus the morphology and quantity have both changed. In comparison, on the basis of EM003, the addition of elements such as Ni, Cu, and Al not only forms finer and more dispersed Cu-rich phases but also influences the nucleation and growth of carbides, forming composite precipitate phases with carbides, thereby further increasing the effect of precipitation strengthening.

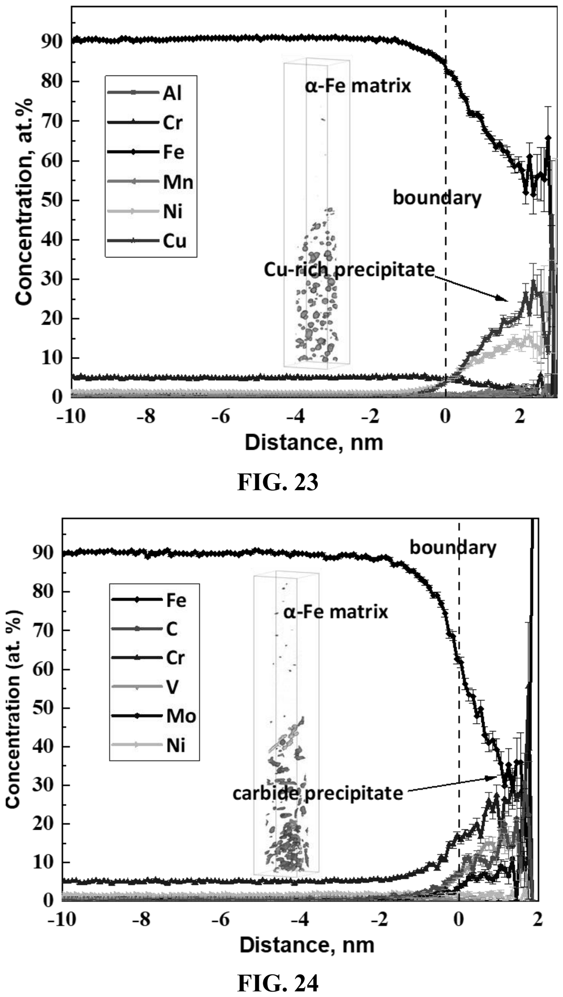

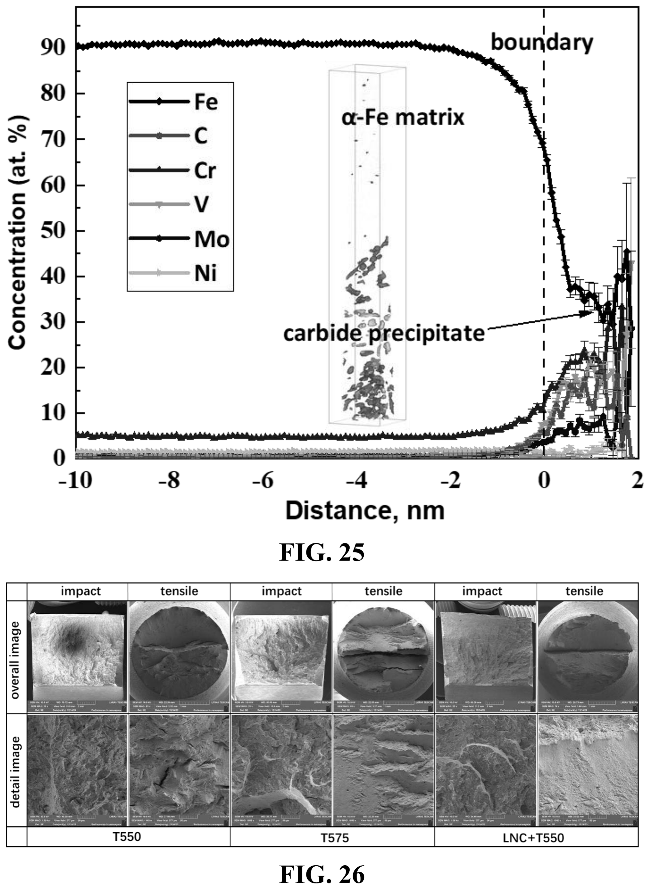

FIG. 22 shows the composition analysis graphs of the region of interest (ROI) in the hot-work die steel provided in Example 4. FIG. 23 shows the composition analysis graphs of the Cu-rich phase in the hot-work die steel provided in Example 4. FIG. 24 shows the composition analysis graphs near the interface of the hot-work die steel provided in Example 4. FIG. 25 shows the composition analysis graphs of the carbides in the hot-work die steel provided in Example 4. As shown in FIGs. 22 to 25, a significant number of second phases, such as Cu-rich phases and carbides, are observed near the interfaces of the hot-work die steel, which is attributed to defects like interfaces acting as elemental diffusion channels, creating favorable conditions for second-phase nucleation. Notably, the Cu-rich phases contain almost no Cr, V, or Mo, while the carbides are virtually free of Cu and Ni, which provides the physical basis for the "adjacent growth" of such two types of precipitates and serves as the rationale for optimizing the chemical composition to enhance the mechanical properties of the hot-work die steel.

FIG. 26 shows the SEM morphology images of the tensile and impact fracture surfaces of the hot-work die steel prepared in Examples 1 to 3. As shown in FIG. 26, ductile fracture occurs in all the differently heat-treated samples, which is consistent with the mechanical properties listed in Table 1.

The description of the above embodiments is intended to merely aid in the understanding of the method of the present invention and its core concepts. It should be noted that, for those of ordinary skills in the art, various improvements and modifications can be further made to the present invention without departing from the principle of the present invention, and these improvements and modifications also fall within the scope of the claims of the present invention. Various modifications to the embodiments will be readily apparent to those skilled in the art, and the generic principles defined herein may be implemented in other embodiments without departing from the spirit or scope of the present invention. Therefore, the present invention will not be limited to the embodiments described herein but is in accordance with the widest scope consistent with the principles and novel features disclosed herein.

## Claims

1. A hot-work die steel easy for additive manufacturing, comprising the following chemical components in percentage by mass: 0.12% to 0.26% of C, 4.5% to 5.8% of Cr, 0.8% to 1.5% of Mo, 0.2% to 1.2% of V, 0.02% to 0.15% of Si, 0.2% to 0.5% of Mn, 0% to 2.45% of Ni, 0% to 0.80% of Al, 0% to 1.25% of Cu, P < 0.015%, and S < 0.01%, with the balance being Fe.

2. The hot-work die steel easy for additive manufacturing of claim 1, comprising the following chemical components in percentage by mass: 0.18% to 0.26% of C, 4.8% to 5.8% of Cr, 1.0% to 1.5% of Mo, 0.5% to 1.2% of V, 0.02% to 0.1% of Si, 0.3% to 0.5% of Mn, 0.02% to 2.45% of Ni, 0% to 0.60% of Al, 0% to 1.0% of Cu, P < 0.015%, and S < 0.01%, with the balance being Fe.

3. The hot-work die steel easy for additive manufacturing of claim 1, comprising the following chemical components in percentage by mass: 0.2% to 0.26% of C, 5.0% to 5.4% of Cr, 1.2% to 1.5% of Mo, 0.8% to 1.0% of V, 0.02% to 0.05% of Si, 0.45% to 0.5% of Mn, 0.5% to 2.4% of Ni, 0.2% to 0.5% of Al, 0.1% to 0.8% of Cu, P < 0.015%, and S < 0.01%, with the balance being Fe.

4. A method for additive manufacturing of the hot-work die steel easy for additive manufacturing of any one of claims 1 to 3, comprising the following steps:
(1) preparing raw materials of an alloy into a hot-work die steel alloy powder by using gas atomization or rotary electrode, chemical components of the hot-work die steel alloy powder being the same as the chemical components of the hot-work die steel easy for additive manufacturing of claim 1, 2 or 3;
(2) performing additive manufacturing using the hot-work die steel alloy powder obtained in step (1) as a raw material to obtain an as-built part; and
(3) subjecting the as-built part obtained in step (2) to post-treatment to obtain the hot-work die steel.

5. The method of claim 4, wherein the hot-work die steel alloy powder in step (1) has a particle size of 15 µm to 75 µm, an apparent density of 3.8 g/cm³ to 4.4 g/cm³, a tap density of 4.6 g/cm³ to 5.0 g/cm³, and a Hall flow rate of ≤ 15 s/50 g.

6. The method of claim 4, wherein process parameters for the additive manufacturing in step (2) comprise: a laser power of 200 W to 450 W, a scan speed of 0.5 m/s to 1.0 m/s, a scan spacing of 50 µm to 150 µm, a powder layer thickness of 20 µm to 100 µm, an interlayer scan path included angle of 65° to 70°, and a substrate preheating temperature of 120°C to 200°C.

7. The method of claim 4, wherein the post-treatment in step (3) comprises one or a combination of two or three selected from the group consisting of a solution treatment, a deep cryogenic treatment, and a tempering treatment.

8. The method of claim 7, wherein the post-treatment is any one selected from the group consisting of the tempering treatment, the solution treatment + the tempering treatment, the deep cryogenic treatment + the tempering treatment, and the solution treatment + the deep cryogenic treatment + the tempering treatment.

9. The method of claim 7 or 8, wherein the solution treatment is conducted at a temperature of 1020°C to 1050°C for a holding time of 0.5 hours to 5 hours with a cooling rate of 2°C/s to 50°C/s, and cooling for the solution treatment is conducted by water quenching.

10. The method of claim 9, wherein the solution treatment is conducted at the temperature of 1020°C to 1050°C for the holding time of 1 hour to 4 hours with the cooling rate of 5°C/s to 50°C/s, and the cooling for the solution treatment is conducted by the water quenching.

11. The method of claim 10, wherein the solution treatment is conducted at the temperature of 1020°C to 1050°C for the holding time of 2 hours to 3 hours with the cooling rate of 20°C/s to 50°C/s, and the cooling for the solution treatment is conducted by the water quenching.

12. The method of claim 7 or 8, wherein the deep cryogenic treatment is conducted at a temperature of -196°C to -120°C for a holding time of 0.5 hours to 3 hours, and warm-back for the deep cryogenic treatment is conducted by leaving to stand at room temperature for 10 minutes to 60 minutes.

13. The method of claim 12, wherein the deep cryogenic treatment is conducted at the temperature of -196°C to -150°C for the holding time of 1 hour to 2.5 hours, and the warm-back for the deep cryogenic treatment is conducted by leaving to stand at the room temperature for 20 minutes to 50 minutes.

14. The method of claim 13, wherein the deep cryogenic treatment is conducted at the temperature of -196°C for the holding time of 1.5 hours to 2 hours, and the warm-back for the deep cryogenic treatment is conducted by leaving to stand at the room temperature for 30 minutes to 40 minutes.

15. The method of claim 7 or 8, wherein the tempering treatment is conducted at a temperature of 400°C to 750°C for a holding time of 0.5 hours to 7 hours.

16. The method of claim 15, wherein the tempering treatment is conducted at the temperature of 460°C to 650°C for the holding time of 3 hours to 7 hours.

17. The method of claim 16, wherein the tempering treatment is conducted at the temperature of 500°C to 600°C for the holding time of 3 hours to 5 hours.

18. Use of the hot-work die steel easy for additive manufacturing of any one of claims 1 to 3 or the hot-work die steel prepared by the method of any one of claims 4 to 17 in a die.

19. The use of claim 18, wherein the die comprises a die-casting die and/or an injection molding die.
